Europäisches Patentamt

European Patent Office

Office européen des brevets

(11) Publication number : **0 572 148 A2**

# (12) EUROPEAN PATENT APPLICATION

(21) Application number : 93303797.0

(22) Date of filing : 17.05.93

(51) Int. Cl.⁵ : **C08L 83/07,** C08K 3/22

(30) Priority : 28.05.92 US 889737

(43) Date of publication of application :
01.12.93 Bulletin 93/48

(84) Designated Contracting States :
DE FR GB

(71) Applicant : GENERAL ELECTRIC COMPANY
1 River Road
Schenectady, NY 12345 (US)

(72) Inventor : Doin, James Edward
RD-1, Box 97
Hoosick Falls, New York 12090 (US)
Inventor : Evans, Edwin Robert
9 Rodriso Court
Clifton Park, New York 12065 (US)

(74) Representative : Pratt, Richard Wilson et al
London Patent Operation G.E. Technical
Services Co. Inc. Essex House 12/13 Essex
Street
London WC2R 3AA (GB)

(54) Silicone elastomer compositions.

(57) Heat curable elastomeric silicone rubber compositions are produced which exhibit good tear strength, compression set, good tensile strength, and excellent heat-age and oil resistance properties. The blend includes 1) a vinyl-stopped organopolysiloxane gum, 2) a silica filler, 3) an MQ or M-D vinyl-Q resin, or blends thereof , and 4) a cross-linking agent to produce a silicone elastomer which is heat curable in the presence of a peroxide catalyst and mixtures of groups 2A and 2B metal oxides including magnesium and zinc.

EP 0 572 148 A2

FIELD OF THE INVENTION

The present invention relates to heat cured silicone elastomer compositions. More particularly, the invention relates to heat cured silicone elastomer compositions containing MQ resins and mixed metal oxides which provide improved resistance to hydrocarbon oils, in particular, ASTM #1 oil.

BACKGROUND OF THE INVENTION

Heat curable silicone rubber compositions are known in the art. Resin containing compositions are known for their ability to resist change at elevated temperature and exposure to adverse conditions over extended periods of time. As a result, these compositions have become attractive for gasketing applications. Efforts have been made to produce resin containing heat cured silicone elastomer compositions having good tear and tensile strength and reduced compression set properties. A problem with such efforts, however, has been the poor retention of properties following immersion in hot hydrocarbon oils, in particular hot ASTM #1 oil, thereby limiting their participation in certain engineering specifications in applications that require performance in ASTM #1 oil.

A number of exemplary patents disclose heat curable elastomeric silicones such as Wada et al., U.S. Patent Nos. 3,671,480 and 3,652,475, Bobear, U.S. Patent Nos. 4,539,357, 4,061,609 and 3,660,345, Creamer, U.S. Patent No. 3,696,068 and Jeram et al., U.S. Patent No. 3,884,866. Thorsrud, U.S. Patent No. 4,968,726 discloses the use of a zinc oxide additive for improving radio frequency sensitivity of polyethylene. Yui et al., U.S. Patent No. 4,552,689 employs an inorganic filler in a synthetic rubber and polypropylene composition.

Although resin containing heat curable silicone rubber compositions having good tear strength, good tensile strength and low compression set properties are known in the art, compositions for use in gasketing applications in internal combustion engines must also exhibit excellent heat age resistance and oil resistance over time.

SUMMARY OF THE INVENTION

The present invention is based upon the discovery that resin containing heat curable rubber (HCR) compositions exhibiting properties retainable in the presence of hot ASTM #1 oil may be produced by adding group (2A) and (2B) metal oxides to such compositions.

According to the present invention, compositions can be produced which, upon heat-curing, exhibit good tear strength, compression set, tensile strength, and excellent heat-age and oil resistance properties. The compositions are also easily processed and produce repeatable and consistent results. One embodiment of the invention comprises (A) an organopolysiloxane gum, (B) an MQ or M D-vinyl Q resin or blends thereof, (C) a silica filler, (D) an optional vinyl containing siloxane gum, (G) an organohydrogensiloxane crosslinking agent and a mixture of group (2A) and (2B) metal oxides, producing a silicone elastomer which is heat curable in the presence of a catalyst.

In one group of compositions, blends are formulated which comprise, by weight:

(A) 100 parts by weight of vinyl-stopped diorganopolysiloxane having a viscosity of about 3,000,000 to about 100,000,000 centipoise (cps) at 25°C;

(B) up to 30 parts by weight based on Component (A) of (1) an organopolysiloxane resin copolymer. The resin copolymer may contain $R_3SiO_{1/2}$ monofunctional units (M units) and $SiO_2$ quadri-functional units (Q units), where each R is independently selected from the group consisting of vinyl radicals and monovalent hydrocarbon radicals free of aliphatic unsaturation. The ratio of M units to Q units ranges from about 0.5:1 to about 1.5:1, wherein about 0.5 to 10.0 weight percent are vinyl groups. Alternatively, Component (B) may comprise (2) an organopolysiloxane resin copolymer containing M and Q units as aforesaid and $R_2SiO_{2/2}$ difunctional (D units) where each R is independently selected from the group consisting of vinyl radicals and monovalent hydrocarbon radicals free of aliphatic unsaturation. Each M unit may represent M or M' e.g. M-vinyl units, and each D unit may represent D or D' e.g. D-vinyl units. The ratio of M units to Q units is from 0.5:1 to about 1.5:1 and the D units are present in an amount of from about 1 to 70 mol percent based upon the total number of mols of siloxy units in the copolymer. The resinous copolymer contains from about 0.5 to about 10.0 weight percent vinyl groups. The organopolysiloxane resin copolymer of Component (B) may contain mixtures of the MQ and the M D-vinyl Q, resins.

(C) up to about 200 parts based upon Component (A) of a finely divided silica filler;

(D) up to about 100 parts based upon Component (A) of a vinyl containing polymer including a vinyl-stopped polymer, a vinyl-on-chain polymer, or both, having from about 5x10⁻³ to about 5 weight percent vinyl; (G) a random copolymer formed of a polydimethyl siloxane (PDMS) and a polymethyl hydrogen siloxane (PMHS) having the formula:

$$R^2_3SiO(SiOR^1H)x(SiOR^1_2)_ySiR^2_3$$

where each $R^1$ is independently chosen from a monovalent hydrocarbon radical free of aliphatic unsaturation containing 1 to about 8 carbon atoms and wherein each $R^2$ is independently chosen from a hydrogen or monovalent hydrocarbon radical free of aliphatic unsaturation containing 1 to about 8 carbon atoms, and x and y range from about 2 to about 100. In the present invention, the hydride is present in an amount ranging from about 0.1 to 10 weight percent of Component (A), preferably 0.5 to 8, and more preferably 0.8 to 2.5 parts by weight. When a hydride agent is employed, a platinum catalyst may be substituted for the peroxide catalyst to cure the composition. In Component (G) x and y may vary so that (G) has a viscosity ranging from about 5 to 500 cps, preferably from about 10 to about 100 cps and more preferably from about 10 to 50 cps at 25°C; and

(I) mixtures of groups 2A and 2B metal oxides including up to about 10 parts by weight based upon Component (A) of (I1) magnesium oxide and up to about 30 parts by weight based upon Component (A) of (I2) zinc oxide.

In order to improve properties or processing, the composition may also contain:

(E) up to about 2 parts by weight of a tetramethyl-divinyl silazane based upon Component (A); and

(F) up to about 10 parts by weight based upon Component (A) of a processing aid comprising low viscosity silanol stopped siloxane fluid of a about 3 to 500 centipoise at 25°C, or a dimethylmethoxy siloxane polymer, or similar compositions such as silanol or methoxy fluids of other viscosities.

From 15 to 20 percent of a cyclic methyl tetramer may be used to treat the filler prior to compounding.

A small amount of water may also be added to increase the processibility of the blend. If used, only up to about 0.1 parts by weight water based on Component (A) is usually employed.

In addition to the foregoing, (K) a heat aging component such as fumed $TiO_2$, iron octoate, $Ce(OH)_4$, or mixtures thereof, may be present in relatively small amounts, e.g., up to 2 parts by weight based upon Component (A). In the examples below the heat aging component consists of 33 weight percent $TiO_2$, 2.5 weight percent iron octoate solution (which comprises about 12 weight percent iron in mineral spirits), 10 weight percent treated fumed silica (160 m²/gm), and 50 weight percent of an 800 penetration vinyl-stopped, vinyl-on-chain gum.

The heat-curable compositions of the present invention provide heat cured silicone elastomers having high tear strength, good tensile strength, low compression set, and good heat-age and oil resistance. This excellent balance of properties is exhibited throughout extended periods of use at high temperatures making these compositions extremely attractive for gasketing, sealing and vibration dampening applications

## DESCRIPTION OF THE INVENTION

The compositions of the present invention contain (A) an organosiloxane gum or gums having a viscosity of about 3 million to 100 million cps at 25°C; (B) an organopolysiloxane resin of the MQ or M D-vinyl Q types; (C) a finely divided silica filler; (D) an optional vinyl containing siloxane gum; and (G) an organohydrogensiloxane cross-linking agent. Combinations of various other components as described herein may also be added.

Component (A) is preferably a vinyl containing diorgano siloxane gum or blend of such gums having a viscosity from about 3,000,000 to about 100,000,000 cps at 25°C. Preferably, the gum has a viscosity of between about 7,000,000 and 84,000,000 cps, more preferably, about 13,000,000 cps at 25°C. The gum is preferably vinyl-stopped and has substantially no vinyl-on-chain. The organo groups in the gum should all be monovalent hydrocarbon radicals. The gum may have a weight percent vinyl concentration of from about $5x10^{-3}$ to about 1. The gum preferably has a weight percent vinyl concentration in the range from about $6.5x10^{-3}$ to about 0.03, more preferably from about $8x10^{-3}$ to about $1.5x10^{-2}$ and more preferably yet from about $8x10^{-3}$ to about $1.2x10^{-2}$. The organo groups in the vinyl polymer or polymers of the gum should all be monovalent hydrocarbon radicals.

In a preferred embodiment, Component (A) has the structure:

$$ViSiOR^1_2 (SiOR^1_2)_x(SiOR^2_2)_y SiR^1_2Vi;$$

wherein Vi is vinyl and each $R^1$ is independently chosen from monovalent hydrocarbon free radicals free of aliphatic unsaturation and containing 1 to about 8 carbon atoms; each $R^2$ is independently chosen from monovalent hydrocarbon radicals containing 1 to about 8 carbon atoms; and x and y are integers chosen such that the viscosity is about 3,000,000 to about 100,000,000 cps at 25°. In other preferred embodiments, x and y are integers chosen such that Component (A) has a viscosity which ranges from about 3,000,000 to about 85,000,000 cps at 25°C and a weight percent vinyl concentration in the range from about $5x10^{-3}$ to about $2x10^{-2}$, preferably from about $8x10^{-3}$ to about $1.5x10^{-2}$ and more preferably from about $8x10^{-3}$ to about $1.2x10^{-2}$.

In accordance with the invention, the amount of Component (A) present in the final product may vary. However, for purposes of explanation herein, it is assumed that 100 parts by weight of the gum is combined with varying amounts of the other components, and the amount of gum in the final product may thereby be inferred. In the Examples below, Component (A1) is a vinyl-stopped gum of about 6000 D units in length, has substantially no vinyl-on-chain and has a penetration of about 1600. (A2) is similar having about 9000 D units and a penetration of about 300.

Penetration is measured using Universal Penetrometer by Precision Scientific Model No. 73510 with a substantially air free sample. The sample penetration is measured at 25°C±1°C using a 100 gm weight and a 1/4" diameter by 3/16" needle foot with rounded edges. The needle is lowered until it just touches the surface of the polymer. Then, the time to achieve up to 300 mm penetration is determined or the amount of penetration after 60 sec. Penetration gum is defined as:

$$\frac{Depth \, of \, Penetration}{Time} \times 60 \text{ sec. at } 25°C$$

Penetration may be controlled by controlling the molecular weight and the viscosity of the gum.

Component (B) may be (1) an organopolysiloxane resin copolymer in an appropriate solvent (e.g. xylene). The resin copolymer may contain $R_3SiO_{1/2}$ monofunctional units (M units,) and $SiO_2$ quadri-functional units (Q units), where each R is independently selected from the group consisting of vinyl radicals and monovalent hydrocarbon radicals free of aliphatic unsaturation. The ratio of M units to Q units ranges from about 0.5:1 to about 1.5:1, wherein about 0.5 to 10.0 weight percent are vinyl groups.

Alternatively, Component (B) may comprise (2) an organopolysiloxane resin copolymer containing M and Q units as aforesaid and $R_2SiO_{2/2}$ difunctional (D or D vinyl units), in an appropriate solvent, where each R is independently selected from the group consisting of vinyl radicals and monovalent hydrocarbon radicals free of aliphatic unsaturation. The ratio of M units to Q units is from 0.5:1 to about 1.5:1 and the D or D vinyl units are present in an amount of from about 1 to 70 mol percent based upon the total number of mols of siloxy units in the copolymer. The resinous copolymer contains from about 0.5 to about 10.0 weight percent vinyl groups. The organopolysiloxane resin copolymer of Component (B) may contain mixtures of the MQ and the M-D vinyl-Q, resins.

The organopolysiloxane resin copolymers of Component (B) in the present composition and their manufacture are well known in the art. Such resins are usually produced by hydrolysis of chlorosilanes in a process described in U.S. Patent No. 3,436,366 which is incorporated herein by reference.

Component (B) is present in the composition of the present invention in an amount ranging from about 1.0 to about 30, preferably from 1.0 to 20 and more preferably from 4 to about 12 parts by weight based on Component (A). Component (B) in the Examples below comprises (B2) dispersed in xylene. Much of the xylene has been vacuum stripped so as to result in a composition comprising 60% by weight solids and 40% by weight xylene.

The process for manufacturing the composition includes a cook and strip step to facilitate the removal of the residual xylene from the finished compound.

Component (C) comprises from about 5 to about 200, preferably from about 10 to about 100 and more preferably from about 20 to about 50 parts by weight of reinforcing fillers such as $SiO_2$ based on Component (A). Examples of reinforcing fillers that may be used include fumed silica and precipitated silica, with fumed silica being preferred. The filler may be pretreated or treated in-situ with various agents, for example cyclopolysiloxanes as disclosed in U.S. Patent No. 2,938,009 to Lucas and silazanes as disclosed in U.S. Patent No. 3,635,743 to Smith. The cyclopolysiloxanes may be, for example, a cyclotetramethyl siloxane present in the amount of about 15 to 20 weight percent of the filler. Preferred fumed silica fillers may have a surface area of about 100 $m^2/gm$ to about 300 $m^2/gm$ and preferably about 160 $m^2/gm$ to about 240 $m^2/gm$. The higher surface area fillers tend to result in better properties, however, they are more expensive than the lower surface area fillers and require surface treatments or more processing aid to incorporate them into the gum. In the Examples below, the filler Component (C) comprises a fumed silica filler having a surface area of about 160 $m^2/gm$ and which has been pretreated with octamethyl cyclotetrasiloxane.

Preferably, Component (D) is added in an amount of up to about 100 parts by weight based on Component (A). The actual amount of Component (D) to be added varies depending upon the vinyl content and the amount of cross-linking desired for controlling the properties exhibited by the cured product.

According to an embodiment of the present invention, Component (D) may be a vinyl-on-chain polymer such as diorganosiloxane gum having a vinyl content of up to about 4 weight percent vinyl, or higher.

In the examples below, Component (D1) is a VOC gum having a vinyl content of about 0.2 weight percent, whereas, Component (D2) is a vinyl-on-chain gum having a vinyl content of about 0.6 weight percent.

Alternatively, Component (D3) may be a vinyl-on-chain, vinyl-stopped gum containing from about $5 \times 10^{-3}$ up to about 1.0 weight percent vinyl. When using a vinyl-on-chain, vinyl chain-stopped gum, about 0.1 to about 100 parts by weight are added based on Component (A). For example, when Component (D3) has a vinyl content of approximately 0.05 weight percent, about 5 parts by weight based upon Component (A) is used.

The vinyl polymer or polymers of Component (D) may contain vinyl-on-chain groups and vinyl or methyl end-groups. In preferred embodiments, Component (D) has the formula:

$$SiOR^1_3 (SiOR^1R^{Vi})_x(SiOR^2_2)_y SiR^1_3$$

Wherein $R^{Vi}$ is a vinyl radical having from 2 to about 10 carbon atoms, each $R^1$ is independently chosen from a vinyl radical having from 2 to about 10 carbon atoms, and a monovalent hydrocarbon free radical free of aliphatic unsaturation and containing 1 to about 8 carbon atoms, each $R^2$ is a monovalent hydro-carbon free radical free of aliphatic unsaturation and containing 1 to about 8 carbon atoms, and x and y are integers, wherein x, y, $R^{Vi}$, $R^1$ and $R^2$ are chosen such that Component (D) has a weight percent vinyl concentration in the range from about $5 \times 10^{-3}$ to about 5 weight percent, preferably from about 0.01 to about 4, and more preferably from about 0.03 to about 4. The amount of Component (D) added to the blend may be increased when the vinyl concentration of Component (D) is low, and a lesser amount of Component (D) may be added when its vinyl concentration is high. For example, when using a vinyl-on-chain gum having a vinyl content of about 4 weight percent, only about 0.5 parts by weight based on Component (A) is added. When using a gum having a vinyl content of only about 0.6 weight percent, however, 5 parts by weight are added based on Component (A).

The vinyl-on-chain units of Component (D) provide increased cross-linking of the cured rubber and enhance those properties necessary for use in gasketing, sealing and vibration dampening applications.

The vinyl containing polymers of Component (D) can be made by a process well known in the art, for example, by reacting cyclotetrasiloxanes in the presence of low molecular weight, linear vinyl chain stoppers at high temperatures in the presence of basic catalysts so as to yield a polymer of the desired molecular weight. When the reaction is over, the catalyst is neutralized and the excess cyclics are vented off to result in the desired polymer. By controlling the amount of chain stopper and the temperature of the reaction, the molecular weight of the desired vinyl-containing polymer end product can be controlled. For more details of the process by which such vinyl containing polymers are produced, reference is made, for example, to U.S. Patent No. 3,660,345, which is incorporated herein by reference.

Component (E) is a vinyl terminated silazane coupling agent and surface treatment for the filler which may take the form:

$$ViSiR_2NHSiR_2Vi$$

wherein R is an organic such as $CH_3$. The coupling agent promotes bonding between Components (A) and (C) and between Components (B) and (C), and may be applied to the filler, Component (C), prior to mixing with the other components.

Component (E) may be vinyl stopped linear silazane such as tetramethyl-divinyl silazane. The material is added for enhancing the bonding of filler to polymer. In the present invention, the silazane also acts as a filler treatment in-situ.

Component (E) is preferably present in an amount of up to about 2 percent, more preferably-up to about 0.3 percent by weight based on the weight of Component (A). Component (E) may be present in an amount of only about 0.03 parts by weight based on 100 parts of Component (A), however, slightly higher amounts are preferred.

In addition to, in conjunction with, or in place of Component (E), small amounts of hexamethyl disilazane may be used to treat fumed silica filler prior to mixing the filler with the other components, or in-situ. If used, up to about 20 parts by weight of hexamethyl disilazane is added based on 100 parts filler.

Other components may also be employed as discussed hereinafter. For example, in order to allow for easier incorporation of the filler in the gum, Component (F), a processing aid or plasticizer is employed. In the preferred embodiment, Component (F) is a low viscosity silanol stopped siloxane fluid having a viscosity ranging from about 3-500 cps and preferably 3 to 50 cps at 25°C. The siloxane fluid is an equilibrium mix of low molecular weight oligomers of about 4 to about 10 D units, preferably between 4 and 6 repeating units in length with a minimum amount of cyclics in equilibrium with the oligomers. The processing aid (F) may have the form of $(R_2SiO_{1/2})_xOH$ where each R is $CH_3$ and x is between 4 and 10, preferably between 4 and 6, with resulting cyclics of the same number of units in equilibrium. Alkoxy terminated siloxanes such as (F1), a methoxy siloxane having the formula:

$$(RSiOR_2)_z(SiOR_2)_x$$

where R is $CH_3$ may be used as process aids. In the present invention, the processing aids are present in amounts between 2 and 10 weight percent of Component (A) preferably between 2.5 and 5.0 parts by weight and most preferably about 3.5 parts by weight based on Component (A). It should be understood that typically the more filler that is used the greater amount of processing aid is employed. In the Examples below, Component (F) has a silanol content of about 7.5 % by weight although a silanol content of about 5 to about 10 weight percent is expected to provide good results; and Component (F1) has an alkoxy content ranging from about 5.5 to about 8% methoxy and a viscosity of about 5 to about 11 centistokes.

5

In addition to the foregoing, Component (G) in the form of a hydride cross-linking agent may be employed. In a preferred embodiment, Component (G) may be a random copolymer formed of a polydimethyl siloxane (PDMS) and a polymethyl hydrogen siloxane (PMHS) having the form:

$$R^2_3SiO(SiOR^1H)_x(SiOR^1_2)_ySiR^2_3$$

wherein where each $R^1$ is independently chosen from a monovalent hydrocarbon radical free of aliphatic unsaturation containing 1 to about 8 carbon atoms and each $R^2$ is independently chosen from a hydrogen or monovalent hydrocarbon radical free of aliphatic unsaturation containing 1 to about 8 carbon atoms, and x and y range from about 2 to about 100. In the present invention, Component (G) is present in an amount ranging from about 0.1 to 10 weight percent of Component (A), preferably 0.5 to 8, and more preferably 0.8 to 2.5 parts by weight. When a hydride agent is employed, a platinum catalyst may be substituted for the peroxide catalyst to cure the composition. In Component (G) x and y may vary so that (G) has a viscosity ranging from about 5 to 500 cps, preferably from about 10 to about 100 cps and more preferably from about 10 to 50 cps at 25°C.

The linear hydride described above can be made by many procedures which are known in the art and particularly by the hydrolysis of appropriate chlorosilanes. See for example, U.S. Patent No. 4,041,101 which is incorporated herein by reference. In the Examples below, Component (G) has a viscosity of about 30 centistokes, a hydride content of about 0.8 percent by weight, and a chain length of about 100 units.

A small amount of water may also be added to increase the processability of the blend. If used, only up to about 0.1 parts by weight water based on Component (A) is usually employed.

To improve the heat-age resistance of the cured compositions of the present invention, Component (H), a heat-age additive, may be employed. The heat aging component such as fumed $TiO_2$, iron octoate, $Ce(OH)_4$, or mixtures thereof, may be present in relatively small amounts, e.g., up to 2 parts by weight based upon Component (A). In the examples below the heat aging component consists of 33 weight percent $TiO_2$, 2.5 weight percent iron octoate (12% iron in mineral spirits), 10 weight percent treated fumed silica (160 m²/gm), and 50 weight percent of an 800 penetration vinyl-stopped, vinyl-on-chain gum.

Only up to about two parts by weight Component (H) is needed based on Component (A) to improve the heat-age characteristics of the composition.

In the present invention, Component (I) comprises mixtures of group 2A and group 2B metal oxides. Specifically, (I1) comprises from about .05 to about 10 parts by weight based upon Component (A) of magnesium oxide (MgO) and (I2) comprises from about 0.5 to about 30 parts by weight based upon Component (A) of zinc oxide (ZnO). In the examples below, the magnesium oxide may be a Maglite 3231, 99.0% through 325 mesh screen sold by Merck Chemical Division, Rahway, New Jersey. The zinc oxide may be XX-78 having a particle size of 0.31 microns, 99.9% through 325 mesh screen sold by New Jersey Zinc Co., Inc., Palmerton, Pennsylvania.

In the present invention, the magnesium oxide and zinc oxide may be mixed in various proportions with the silicone elastomer A. In the present invention, when mixing MgO and ZnO with polymer (A), MgO is present in amounts ranging from about .1 to about 2, preferably .15 to about .8 and more preferably .2 to about .4 parts by weight based upon 100 parts of (A). The ZnO is present in an amount from .1 to about 10, preferably 1 to about 8 and more preferably 2.6 to about 7.8 parts by weight based upon Component (A).

The mixture of metal oxides with the polymers and resins tends to enhance the resistance to hot oil by serving as acid and base acceptors which are the thermal oxidative decompositions products of the oil. The oxides also improve upon the resistance of the materials to thermal aging when not in the presence of hot oil.

In the present invention, the oxides are generally added to the HCR compounds after the materials have been formulated and passed through a cook cycle to remove volatiles. The temperature during the addition is less 80°C, and the additions are preferably made when the compound is in the doughmixer. Alternatively, oxides may be added to the compound while being banded on a rubber material. Either mode of addition is performed until the oxides are thoroughly dispersed.

While the addition of group 2A and 2B metal oxides, in particular those of magnesium and zinc, to protect against acids is known, the discovery that MQ resin containing silicone rubber compounds are particularly susceptible to degradation in hot ASTM #1 oil and that the combination of MgO and ZnO additives can be used to substantially ameliorate that susceptibility is unique.

Other components which may be added to the blends of the present invention include, but are not limited to:

(K) a heat age additive comprising cerium hydroxide, preferably about 75% by weight, master-batched in polydimethylsiloxane fluid having a viscosity of about 30,000 cps at 25°C.

In order to form a heat curable rubber, (L) an organic peroxide, free radical initiator or curing catalyst is provided. The preferred peroxide curing agents are thermal decomposition organic peroxides conveniently used to cure silicone elastomers. Examples of suitable organic peroxide free radical initiators for use in the present invention are disclosed, for example, in U.S. Patent No. 4,539,357 to Bobear which is incorporated herein by reference. Suitable peroxide catalysts include dialkyl peroxide such as di-tertiary-butyl peroxide, tertiary-butyl-triethylmethyl peroxide, di-tertiary-butyl-tertiary-triphenyl peroxide, t-butyl perbenzoate and a di-tertiary alkyl peroxide such as dicumyl peroxide. Under certain conditions hereinafter described, such as when a hydride is used, a platinum catalyst may be employed instead as an initiator. In the examples below, the preferred catalyst is a vinyl specific peroxide such as 2,5 dimethyl-2,5-di(t-butyl peroxy) hexane e.g., (Lupersol ™101 sold by Lucidol Division of Penwalt Corp.). The preferred catalyst (L), Lupersol™ 101 is in the form of a paste comprising 2,5 dimethyl-2,5-di(t-butyl peroxy) hexane which is on a carrier (calcium carbonate) and dispersed in a polydimethylsiloxane fluid having a viscosity of 30,000 cps at 25°C. The composition contains about 33 weight percent peroxide and requires about 1.2 parts of the master batch to provide about 0.4 parts of active peroxide.

Frequently used thermal decomposition catalysts activate within a temperature range of about 330°F to about 390°F.

Optionally, (M) a pigment such as carbon black in a PDMS master batch sold by Kenrich Corp may be used. The material is essentially inert and is primarily for aesthetics.

EXAMPLES

The following Examples shown below used components mixed in various proportions to produce oil resistant resin containing heat curable silicone rubber compositions:

### BASE COMPOSITION 1
### (Base 1)

| Component | Parts/Wt. |
|---|---|
| A1 | 85 |
| B | 10 |
| C | 28 |
| D2 (.6% Vi) | 5 |
| E | 0.14 |
| F | 3 |
| G | 1.4 |
| H | 1.1 |
| I1 | 1.4 |

|  | I | II |
|---|---|---|
| Base 1 | 100 | 100 |
| I2 | – | 4 |
| K | – | 0.8 |
| L | 1.2 | 1.2 |
| M | 0.3 | 0.3 |

### Properties

|  | I | II |
|---|---|---|
| Shore A | 48 | 49 |
| Tensile (psi) | 1180 | 1238 |
| Elongation % | 654 | 670 |
| 100% modulus (psi) | 199 | 212 |

### 168 hr/300°F
### ASTM #1 oil

|  | I | II |
|---|---|---|
| Shore A | 44 | 45 |
| Tensile, psi | 942 | 1031 |
| Elongation % | 512 | 553 |

The data show that a resin containing composition (Ex. 1) having an MgO additive only has less resistance to hot #1 ASTM oil than the composition (Ex. II) containing mixtures of MgO and ZnO as additives.

EP 0 572 148 A2

<u>BASE COMPOSITION 2</u>
(Base 2)

| Component | Parts/Wt. |
|---|---|
| A2 | 85 |
| B | 10 |
| C | 29 |
| D2 (.2% Vi) | 5 |
| E | 0.12 |
| F | 3 |
| G | 1.4 |

| | <u>III</u> | <u>IV</u> | <u>V</u> |
|---|---|---|---|
| Base 2 | 100 | 100 | 100 |
| H | 0.8 | 0.8 | 0.8 |
| I1 | 1.0 | 1.0 | 1.0 |
| I2 | – | 6 | – |
| K | – | 0.8 | – |
| L | 1.2 | 1.2 | 1.2 |
| M | 0.3 | 0.3 | 0.3 |

<u>Properties</u>

| | | | |
|---|---|---|---|
| Shore A | 51 | 52 | 51 |
| Tensile (psi) | 1514 | 1400 | 1333 |
| Elongation % | 759 | 714 | 695 |
| Tear (ppi) | 195 | 246 | 256 |
| 100% modulus (psi) | 191 | 198 | 193 |
| SG | 1.127 | | |
| C/S 22/350% | 16.9 | | |

168 hr/300°F
<u>ASTM #1 oil</u>

| | | | |
|---|---|---|---|
| Shore A | 45 | 44 | 45 |
| Tensile, psi | 1038 | 1321 | 1080 |
| Elongation % | 560 | 680 | 598 |

The data again show that the ZnO additive in combination with MgO (Ex. IV) results in improved oil resistance (e.g., a smaller drop in tensile strength and elongation) than non-ZnO containing compositions such as Ex. III and V.

9

BASE COMPOSITION 3
(Base 3)

| Component | Parts/Wt. |
|-----------|-----------|
| A2 | 85 |
| B | 10 |
| C | 30 |
| D2 (.2% Vi) | 5 |
| E | 0.12 |
| F | 3 |
| G | 1.4 |

| | VI | VII | VIII | IX | X |
|--|-----|-----|------|-----|------|
| Base 3 | 100 | 100 | 100 | 100 | 100 |
| H | 0.8 | 0.8 | 0.8 | 0.8 | -- |
| I1 | 1.2 | 1.2 | 1.2 | 1.2 | 1.2 |
| I2 | 4 | 4 | 6 | - | 4 |
| K | 0.8 | - | 0.8 | - | 0.8 |

### Properties

| | VI | VII | VIII | IX | X |
|--|-----|-----|------|-----|------|
| Shore A | 48 | 47 | 48 | 46 | 47 |
| Tensile (psi) | 1525 | 1536 | 1562 | 1715 | 1624 |
| Elongation % | 800 | 826 | 823 | 860 | 833 |
| Tear (ppi) | 279 | 210 | 262 | 161 | 199 |
| 100% modulus (psi) | 177 | 175 | 177 | 171 | 175 |
| SG | 1.169 | 1.160 | 1.193 | 1.133 | 1.158 |

**168 hr/300°F**
**ASTM #1 oil**

| | VI | VII | VIII | IX | X |
|--|-----|-----|------|-----|------|
| Shore A | 44 | 43 | 44 | 43 | 43 |
| Tensile, psi | 1186 | 1184 | 1211 | 1142 | 1238 |
| Elongation % | 697 | 700 | 699 | 711 | 693 |

**168 hr/300°F**
**ASTM #2 oil**

| | VI | VII |
|--|-----|------|
| Shore A | 42 | 43 |
| Tensile, psi | 1297 | 1284 |
| Elongation % | 727 | 724 |

The data show that Component (K) has little effect on oil resistance. However, Ex. IX, which does not contain ZnO has a sharp drop in tensile strength from an initial value of 1715 psi to 1142 psi after immersion in hot oil.

<u>BASE COMPOSITION 4</u>
(Base 4)

| Component | Parts/Wt. |
|---|---|
| A2 | 85 |
| B | 10 |
| C | 29 |
| D2 (.2% Vi) | 5 |
| E | 0.12 |
| F | 1.5 |
| G | 1.4 |
| F1 | 3 |

| | XI | XII |
|---|---|---|
| Base 4 | 100 | 100 |
| H | 0.8 | 0.8 |
| I1 | 1.2 | 1.2 |
| I2 | – | 4 |
| L | 1.2 | 1.2 |
| M | 0.3 | 0.3 |

## Properties

| | XI | XII |
|---|---|---|
| Shore A | 48 | 48 |
| Tensile (psi) | 1345 | 1278 |
| Elongation % | 685 | 650 |
| Tear (ppi) | 270 | 290 |
| 100% modulus (psi) | 201 | 190 |
| SG | 1.125 | 1.153 |

## 168 hr/300°F ASTM #1 oil

| | XI | XII |
|---|---|---|
| Shore A | 43 | 43 |
| Tensile, psi | 877 | 976 |
| Elongation % | 503 | 523 |

The absence of ZnO in Ex. XI results in a greate proportional reduction in tensile strength after immersion in hot ASTM oil.

## BASE COMPOSITION 5
### (Base 5)

| Component | Parts/Wt. |
|---|---|
| A2 | 85 |
| B | 10 |
| C | 29 |
| D2 (.6% Vi) | 5 |
| E | 0.14 |
| F | 1.5 |
| G | 1.4 |
| F1 | 3.5 |

| | XIII | XIV |
|---|---|---|
| Base 5 | 100 | 100 |
| H | 0.8 | 0.8 |
| I1 | 1.2 | 1.2 |
| I2 | – | 4 |
| L | 1.2 | 1.2 |
| M | 0.3 | 0.3 |

### Properties

| | XIII | XIV |
|---|---|---|
| Shore A | 48 | 49 |
| Tensile (psi) | 1312 | 1362 |
| Elongation % | 679 | 670 |
| Tear (ppi) | 176 | 245 |
| 100% modulus (psi) | 208 | 216 |
| SG | 1.126 | 1.159 |

### 168 hr/300°F
### ASTM #1 oil

| | XIII | XIV |
|---|---|---|
| Shore A | 43 | 45 |
| Tensile, psi | 912 | 1065 |
| Elongation % | 499 | 543 |

Oil resistance of Example XIII without ZnO is less than the oil resistance of Example XIV containing ZnO, both in terms of tensile strength and elongation.

## BASE COMPOSITION 6
### (Base 6)

| Component | Parts/Wt. |
|-----------|-----------|
| A1 | 94.4 |
| B | – (no resin) |
| C | 30 |
| D2 (.2% Vi) | 5.6 |
| E | 0.12 |
| F | 3.0 |
| G | 1.4 |

| | XV | XVI |
|---|-----|------|
| Base 6 | 100 | 100 |
| H | 0.7 | 0.7 |
| I1 | 1.1 | 1.1 |
| I2 | 4 | – |
| K | 0.7 | 0.7 |
| L | 1.2 | 1.2 |
| M | 0.3 | 0.3 |

### Properties

| | XV | XVI |
|---|-----|------|
| Shore A | 37 | 37 |
| Tensile (psi) | 1525 | 1645 |
| Elongation % | 998 | 949 |
| Tear (ppi) | 131 | 139 |
| 100% modulus (psi) | 114 | 110 |
| SG | 1.154 | 1.120 |

### 168 hr/300°F ASTM #1 oil

| | XV | XVI |
|---|-----|------|
| Shore A | 28 | 29 |
| Tensile, psi | 1502 | 1462 |
| Elongation % | 1050 | 955 |

### 168 hr/300°F ASTM #2 oil

| | XV | XVI |
|---|-----|------|
| Shore A | 30 | 27 |
| Tensile, psi | 1549 | 1604 |
| Elongation % | 933 | 998 |

The data shows that non-resin containing compositions inherently have good resistance to hot ASTM #1 oil and are less affected by the absence of ZnO. Thus, it can be said that the resin component reduces oil resistance and the ZnO in combination with MgO improves the oil resistance of resin containing compositions especially in ASTM #1 oil.

While there have been described what at present are considered to be the preferred embodiments of the present invention, it will be readily apparent to those skilled in the art that various changes may be made therein without departing from the invention and it is intended in the claims to cover such changes and modifications as fall within the true spirit and scope of the invention.

**Claims**

1. A heat cured silicone rubber composition comprising in parts by weight:

   (A) 100 parts by weight of an organopolysiloxane having a viscosity of about 3 million to about 100 million cps at 25°C;

   (B) about 1 to about 30 parts by weight based upon Component (A) of an organopolysiloxane resin copolymer comprising:

   1) $R_3SiO_{1/2}$ units (M units) and $SiO_2$ units (Q units) where each R is independently selected from the group consisting of vinyl radicals and monovalent hydrocarbon radicals free of aliphatic unsaturation with a ratio of M units to Q units ranging from 0.5:1 to about 1.5:1, where the copolymer contains from about 0.5 to 10 weight percent vinyl groups, or

   2) $R_3SiO_{1/2}$ units (M units), $SiO_2$ units (Q units) and $R^{Vi}_2SiO_{2/2}$ units (D vinyl units) where each R is as defined above and each $R^{vi}$ is a vinyl containing radical having from 2 to about 10 carbon atoms, and where the ratio of M units to Q units is from 0.5:1 to about 1.5:1, and the D vinyl units are present up to about 70 mol percent based upon the total number of mols of siloxy units in the copolymer, and where the resinous copolymer contains from about. 0.5 to about 10.0 weight percent vinyl groups, or

   3) mixtures of 1 and 2;

   (C) up to about 200 parts by weight based upon Component (A) of a finely divided filler;

   (D) up to about 100 parts based upon Component (A) of a vinyl containing polymer having a vinyl content of about $5 \times 10^{-3}$ to about 5 weight percent, Component (D) increasing the amount of cross-linking within the heat cured silicone rubber composition;

   (G) from about 0.1 to about 10 weight percent based on Component (A) of a hydride cross-linking agent; and

   (I) a mixture of group 2A and 2B metal oxides including magnesium oxide and zinc oxide.

2. The composition of claim 1, wherein the magnesium oxide is present in an amount ranging up to about 10 parts by weight based upon Component (A) and the zinc oxide is present in an amount up to about 30 parts by weight based upon Component (A).

3. The heat cured silicone rubber composition of claim 1 or Claim 2, wherein Component (A) has the structure :

$$ViSiOR^1_2(SiOR^1_2)_x(SiOR^2_2)_ySiR^1_2Vi;$$

   wherein Vi is vinyl and each $R^1$ is independently chosen from monovalent hydrocarbon free radicals free of aliphatic unsaturation and containing 1 to about 8 carbon atoms;

   each $R^2$ is independently chosen from monovalent hydrocarbon radicals containing 1 to about 8 carbon atoms, and x and y are integers chosen such that the viscosity is about 3,000,000 to about 100,000,000 cps at 25°.

4. The heat cured silicone rubber composition of any preceding claim, wherein Component (D) has the fonmula :

$$SiOR^1_3 (SiOR^1R^{Vi})x(SiOR^2_2)_y SiR^1_3$$

   wherein $R^{Vi}$ is a vinyl radical having from 2 to about 10 carbon atoms, each $R^1$ is independently chosen from a vinyl radical having from 2 to about 10 carbon atoms, and a monovalent hydrocarbon free radicals free of aliphatic unsaturation and containing 1 to about 8 carbon atoms, each $R^2$ is a monovalent hydrocarbon free radical free of aliphatic unsaturation and containing 1 to about 8 carbon atoms, and x and y are integers, wherein x, y, $R^{Vi}$, $R^1$ and $R^2$ are chosen such that Component (D) has a weight percent vinyl concentration in the range from about $5 \times 10^{-3}$ to about 5 weight percent.

5. The heat cured silicone rubber composition of any preceding claim, further comprising :

   (E) up to about 2 parts by weight of a tetramethyl-divinyl silazane based on 100 parts by weight of Component (A).

6. The heat cured silicone rubber composition of any preceding claim, further comprising :

   (F) up to about 10 parts by weight based upon Component (A) of a silanol stopped siloxane fluid having a viscosity of about 3 to about 500 cps at 25°C.

7. The heat cured silicone rubber composition of any one of claims 1 to 6, wherein Component (G), is an organohydrogensiloxane cross-linking agent having a hydride content of about 0.8 percent by weight.

8. The heat cured silicone rubber composition of any one of Claims 1 to 6, wherein Component (G) has the formula

$$R^2_3SiO(SiOR^1H)_x(SiOR^1_2)_ySiR^2_3$$

where each $R^1$ is independently chosen from a monovalent hydrocarbon radical free of aliphatic unsaturation containing 1 to about 8 carbon atoms and wherein each $R^2$ is independently chosen from a hydrogen or monovalent hydrocarbon radical free of aliphatic unsaturation containing 1 to about 8 carbon atoms, and x and y vary so that (G) has a viscosity ranging from about 5 to 500 cps at 25°C.

9. The heat cured silicone rubber composition of any preceding claim, further comprising Component (H) up to about 2 parts by weight based upon Component (A) of a heat-age additive.

10. The heat cured silicone rubber composition of any preceding claim, comprising 20 to 50 parts by weight based on Component (A) of Component (C).